# FASCICULE DE BREVET EUROPEEN

(11) **EP 3 270 040 B1**
(45) Date de publication et mention de la délivrance du brevet: **30.01.2019**
(21) Numéro de dépôt: 17179484.5
(22) Date de dépôt: 04.07.2017
(51) Int. Cl.: F21S 8/00, H01R 12/71, H01R 13/24

(54) **MODULE LUMINEUX POUR VEHICULE AUTOMOBILE**
LEUCHTMODUL FÜR KRAFTFAHRZEUG
LIGHT MODULE FOR A MOTOR VEHICLE

(30) Priorité: 07.07.2016 FR 1656526
(43) Date de publication de la demande: 17.01.2018
(73) Titulaire: Valeo Iluminacion, 23600 Martos (ES)
(72) Inventeur: RUBIA, Juan-Antonio, 23600 MARTOS (ES); RODRIGUEZ, Leandro, 23600 MARTOS (ES); SANCHEZ, Ramon, 23600 Martos (ES); MORENO, Juan-Francisco, 23600 MARTOS (ES); CABANNE, Damien, 93012 BOBIGNY CEDEX (ES); MOISY, Eric, 23600 MARTOS (ES); FERNANDEZ, Ricardo, 23600 MARTOS (ES)
(74) Mandataire: Oggioni, Baptiste

(56) Documents cités:
- EP-A1- 2 995 850
- EP-A1- 3 026 761
- WO-A1-2015/098822
- US-A1- 2001 012 706

## Description

Les dispositifs d'éclairage et/ou de signalisation de véhicule automobile doivent répondre d'une part à des critères fonctionnels, comme la puissance lumineuse et l'agencement spécifique pour la réalisation d'un faisceau déterminé et réglementaire, ou encore une durée de vie élevée, un faible encombrement, une facilité de mise en oeuvre, et ils doivent d'autre part répondre à des conditions esthétiques imposées par les constructeurs automobiles pour une identification visuelle de leur véhicule.

L'utilisation de sources lumineuses mettant en oeuvre une ou plusieurs diodes électroluminescentes est devenu fréquente.

On assiste plus récemment à l'utilisation de diodes électroluminescentes organiques, également désignées dans ce qui suit par son acronyme anglo-saxon OLED (Organic Light Emitting Diode), est classiquement composée de deux électrodes (une anode et une cathode) entre lesquelles sont placées au moins une couche d'émission, réalisée dans un matériau électroluminescent, ainsi qu'un ensemble de couches de transport électronique, la couche d'émission et les couches de transport électronique étant toutes réalisées dans des matériaux organiques. Afin d'exciter les couches de transport et dans la couche d'émission et obtenir l'électroluminescence du matériau constituant ladite couche d'émission, on doit appliquer une tension électrique entre les deux électrodes.

Bien que la puissance lumineuse émise par une source de type OLED reste inférieure à celle émise par une source à diodes électroluminescentes non organiques (ou LEDs, pour Light Emitting Diode), de telles sources sont de plus en plus utilisées dans le domaine automobile, tant pour l'éclairage ou la signalisation du véhicule à proprement parler que pour des raisons esthétiques, et notamment de signature visuelle et lumineuse du véhicule.

Un module lumineux à OLED pour véhicule automobile se compose généralement d'une partie émissive agencée en regard d'une glace de fermeture d'un projecteur et d'une partie de connexion par laquelle ce module lumineux est connecté à un dispositif d'alimentation électrique et de pilotage du dispositif d'éclairage et/ou de signalisation du véhicule. Cette partie de connexion constitue un point de fragilité de ces modules, compte tenu de la nature même des matériaux qui constituent le module à OLED et de leurs propriétés mécaniques, et de l'effort d'enfichage que doit supporter la partie de connexion au moment de son insertion dans une prise correspondante. Le contexte d'implantation dans un véhicule automobile, qui génère des vibrations, des accélérations, ou encore des contraintes thermiques, augmente le risque de rupture de cette connexion fragilisée. EP 2.995.850 divulgue un module selon le préambule de la revendication 1.

L'invention a pour but de pallier cet inconvénient et de proposer un module lumineux pour véhicule automobile qui mette en oeuvre une ou plusieurs sources lumineuses à diodes électroluminescentes organiques, et dans lequel le risque de rupture de la connexion électrique de ces sources soit réduit au minimum.

La présente invention concerne un module lumineux selon la revendication 1.

Le ou les deuxièmes plots conducteurs peuvent être portés par le support ou bien être disposés à distance du support.

Selon une caractéristique de l'invention, l'élément intermédiaire de connexion peut comporter au moins une portion de connexion réalisée en un matériau conducteur et une portion d'amortissement réalisée en un matériau souple. L'élément intermédiaire de connexion peut notamment être agencé de manière à ce que la portion de connexion vienne entre le ou les premiers et le ou les deuxièmes plots lorsque ces plots sont reliés électriquement.

L'épaisseur de la portion de connexion peut être sensiblement inférieure, notamment négligeable, à l'épaisseur de la portion d'amortissement. Notamment, l'épaisseur de la portion de connexion peut être telle que la portion de connexion est élastiquement déformable.

Le module lumineux peut être un module d'éclairage de la route, un module de signalisation du véhicule ou un module d'éclairage de l'intérieur du véhicule.

Selon différentes caractéristiques de l'invention, prises seules ou en combinaison, on pourra prévoir que :
- le matériau souple formant la portion d'amortissement de l'élément intermédiaire de connexion présente une forte résistivité électrique ; le matériau souple est notamment un matériau isolant électriquement ;
- le matériau souple formant la portion d'amortissement de l'élément intermédiaire de connexion est un silicone ;
- la portion de connexion comporte une couche de connexion, et la portion d'amortissement comporte au moins deux couches d'amortissement entre lesquelles est disposée la couche de connexion ;
- l'élément intermédiaire de connexion comporte un empilement de couches de connexion et de couches d'amortissement ;
- l'empilement est réalisé de telle manière que chaque couche de connexion est séparée de la couche de connexion la plus proche par une couche d'amortissement ; en d'autres termes, chaque couche de connexion est intercalée entre deux couches d'amortissement ;
Selon l'invention,
- ladite au moins une diode électroluminescente organique comporte une partie émissive et une partie de connexion destinée à assurer la connexion électrique avec un dispositif d'alimentation et/ou de pilotage de l'ensemble d'éclairage ou de signalisation du véhicule, et la partie de connexion comporte un ensemble de premiers plots conducteurs dont chacun est relié à ladite partie émissive par une piste conductrice ;
- le nombre de premiers plots conducteurs peut être défini en fonction de l'agencement de la partie émissive de la diode électroluminescente organique et notamment en fonction du nombre de surfaces éclairantes distinctes que comporte cette partie émissive. A titre d'exemple, on pourra prévoir d'avoir une borne d'alimentation négative, c'est à dire reliée à la masse électrique, commune à chacune des surfaces éclairantes, et une borne d'alimentation positive spécifique à chacune des surfaces éclairantes ;
- le support comporte une base qui forme une cavité apte à accueillir la partie de connexion de ladite au moins une diode électroluminescente organique, et cette base comporte des moyens de maintien de ladite partie de connexion dans la cavité ;
Selon l'invention, le support est agencé de sorte que le capot de protection est monté pivotant sur la base, sur l'un des bords pour autoriser une position ouverte dans laquelle la base est dégagée et une position fermée dans laquelle le capot de protection vient en recouvrement de la base ;
- le capot de protection et la base du support de la diode électroluminescente organique comportent chacun des moyens complémentaires aptes à coopérer pour permettre le maintien en position dudit capot de protection sur ladite bas.

On pourra prévoir que l'élément intermédiaire de connexion soit rapporté sur une face intérieure d'un capot de protection du support : le capot est le cas échéant configuré pour venir dans une position fermée en recouvrement de la cavité lorsque la partie de connexion est logée dans la cavité, la face intérieure étant la face en regard de la partie de connexion dans la position dite fermée.

On peut en outre prévoir que :
- chaque couche de matériau conducteur de la barrette de connexion peut être reliée à une piste conductrice agencée sur la face intérieure du capot de protection, ces pistes conductrices se rassemblant en un connecteur apte à coopérer avec un connecteur complémentaire de l'ensemble d'éclairage ou de signalisation du véhicule ;
- les premiers plots conducteurs de ladite au moins une diode électroluminescente organique et la barrette de connexion sont agencés de telle manière que, lorsque le capot de protection est placé sur la partie de connexion de ladite au moins une diode électroluminescente organique, chaque plot conducteur de cette dernière est en contact avec une couche de matériau conducteur de la barrette de connexion ;

En variante, le support peut comporter un capot de protection pourvu d'une fenêtre, l'élément intermédiaire de connexion étant montée sur la diode électroluminescente organique de sorte à venir à travers la fenêtre lorsque l'OLED est montée sur le support. Le cas échéant, le support peut être dépourvu d'élément de connexion électrique et être destiné à venir au contact d'un connecteur comportant ledit deuxième plot de connexion disposé au droit de la fenêtre.

On comprend que le au moins un deuxième plot conducteur peut être porté par le support, ou bien en variante être disposé à distance du support.

L'invention concerne également un dispositif d'éclairage et/ou de signalisation d'un véhicule automobile comportant au moins un module lumineux tel que décrit précédemment.

D'autres caractéristiques, détails et avantages de l'invention, ressortiront plus clairement à la lecture de la description donnée ci-après à titre indicatif en relation les figures suivantes :
- la figure 1 est une vue schématique en perspective d'une diode électroluminescente organique d'un module lumineux selon l'invention ; et
- la figure 2 est une vue schématique en perspective d'un support d'une diode telle que celle illustrée sur la figure 1, dans un module lumineux selon l'invention.

Il faut tout d'abord noter que si les figures exposent l'invention de manière détaillée pour sa mise en oeuvre, elles peuvent bien entendu servir à mieux définir l'invention le cas échéant.

Dans ce qui suit, les notions de "longueur" et de "largeur" se référeront, pour les éléments de forme sensiblement rectangulaire ou parallélépipédique, respectivement aux dimensions des grands côtés et des petits côtés de ces formes.

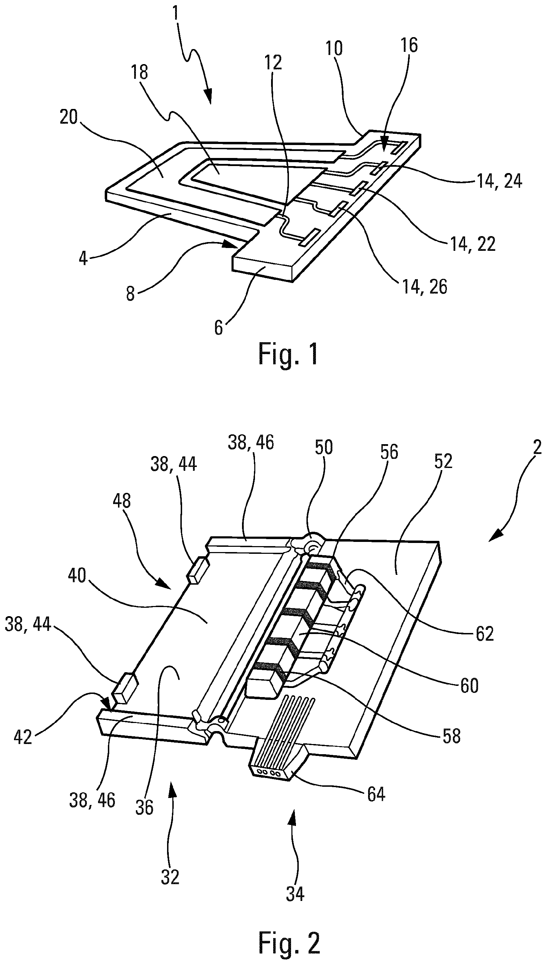

Un module lumineux selon l'invention comporte au moins une diode électroluminescente organique (ou diode OLED, dans ce qui suit) 1, accueillie dans un support 2. La diode électroluminescente organique 1, illustrée seule sur la figure 1, comporte une partie émissive 4, et une partie de connexion 6 destinée à permettre le raccordement électrique de la partie émissive avec un dispositif d'alimentation électrique et/ou de pilotage de l'ensemble de signalisation et/ou d'éclairage du véhicule, ici non représenté. La partie émissive 4 est classiquement composée d'un ensemble de couches polymères prises en sandwich entre une anode et une cathode, et elle peut présenter, compte tenu de la nature des matériaux qui la composent, une certaine souplesse mécanique. Selon différents modes de réalisation, la partie émissive 4 de la diode OLED 1 peut comporter une ou plusieurs surfaces éclairantes distinctes. La partie de connexion 6 est réalisée dans un matériau isolant, mécaniquement plus rigide, et par exemple, et de manière non limitative, un verre ou une résine polymère. Selon le mode de réalisation plus particulièrement illustré sur les figures, elle se présente sous la forme d'une plaque sensiblement parallélépipédique à partir d'un des grands côtés de laquelle s'étend la partie émissive 4 de la diode OLED 1. De manière plus détaillée, la partie émissive 4 de la diode OLED 1 prolonge sensiblement dans un même plan la partie de connexion 6 depuis un premier grand côté 8 de la plaque formant ladite partie de connexion, sensiblement au centre de ce premier grand côté de sorte que des bords d'épaulement 10 sont agencés de part et d'autre de la partie émissive.

Afin de réaliser la connexion électrique de la diode OLED 1 avec un dispositif d'alimentation électrique et/ou de pilotage, des pistes conductrices 12 sont agencées dans la partie de connexion 6. Chacune de ces pistes conductrices est issue de la partie émissive 4 de la diode OLED 1 et se termine, sur la plaque formant la partie de connexion 6 de celle-ci, par un premier plot conducteur 14. Avantageusement, les premiers plots conducteurs 14 sont tous agencés sur une première face 16 de la partie de connexion 6, visible sur la figure 1, et en série selon une première direction d'allongement. On comprend que le nombre de premiers plots conducteurs 14 est défini en fonction de la partie émissive 4 de la diode OLED 1 et notamment en fonction du nombre de surfaces éclairantes distinctes que comporte la partie émissive 4 de la diode OLED 1. On peut notamment prévoir d'avoir une borne d'alimentation négative, c'est à dire reliée à la masse électrique, commune à chacune des surfaces éclairantes, et une borne d'alimentation positive spécifique à chacune des surfaces éclairantes. Dans le cas illustré, la partie émissive 4 comporte deux zones d'émission, avec une zone d'émission centrale 18 et une zone d'émission périphérique 20. Selon les conditions de circulation, ou les effets esthétiques recherchés, le module de commande associé au dispositif d'éclairage et/ou de signalisation pourra envoyer une instruction d'allumage de la zone d'émission centrale, une instruction d'allumage de la zone d'émission périphérique, ou une instruction d'allumage simultanée de ces deux zones. Tel qu'illustré, on a prévu une borne négative 22 unique, commune aux deux zones d'émission, et quatre bornes positives. Deux bornes 24 sont reliées à la zone d'émission centrale 18 et deux bornes 26 sont reliées à la zone d'émission périphérique 20, deux bornes étant associées à chacune des zones pour faciliter une alimentation et un éclairage de la zone correspondante qui soient homogènes.

On comprend que le nombre de premiers plots conducteurs 14 est supérieur au nombre de surfaces éclairantes distinctes définies dans la partie émissive 4 de la diode OLED 1.

Le support 2, illustré seul sur la figure 2 dans un mode de réalisation particulier, comporte une base 32 et un capot de protection 34 monté pivotant sur l'un des bords pour autoriser une position ouverte (visible sur la figure 2) dans laquelle la base est dégagée et une position fermée dans laquelle le capot de protection 34 vient en recouvrement de la base 32.

La base 32 présente une paroi de fond 36 sous forme, selon le mode de réalisation illustré par les figures, d'une plaque sensiblement rectangulaire dont les dimensions sont sensiblement identiques à celles d'une face inférieure de la partie de connexion 6 de la diode OLED 1, c'est-à-dire la face opposée à la première face 16, dite supérieure, de cette même partie de connexion 6 sur laquelle sont agencés les premiers plots conducteurs 14.

La base 32 comporte en outre des parois latérales 38 venant border au moins partiellement la paroi de fond. Les parois latérales prolongent sensiblement perpendiculairement la paroi de fond 36 en définissant de la sorte une cavité 40 apte à recevoir la partie de connexion 6, l'extrémité supérieure 42 de ces parois latérales 38, c'est-à-dire l'extrémité tournée à l'opposé de la paroi de fond 36, étant susceptible de servir de butée de position au capot de protection 34 dans sa position fermée.

Dans une variante non représentée, la base 32 du support 2 peut comporter également des éléments permettant de faciliter l'engagement et la mise en place de la partie de connexion 6 de la diode OLED 1 au sein de la cavité 40, et par exemple, une forme apte à coopérer avec une forme complémentaire définie sur la partie de connexion 6.

On comprend que les parois latérales 38 permettent de maintenir transversalement la partie de connexion 6 de la diode OLED 1 à l'intérieur de la cavité tandis que la paroi de fond 36 et le capot de protection 34, lorsqu'il se trouve dans sa position fermée, la retiennent verticalement.

Selon le mode de réalisation plus particulièrement illustré sur les figures, ces moyens de maintien consistent en un ensemble de butées latérales 44 agencées en série sur l'un des grands côtés de la paroi de fond 36 et un ensemble de parois latérales 46 agencées parallèlement le long des petits côtés de la paroi de fond 36, sensiblement sur toute la longueur de ces petits côtés.

Plus précisément, ces moyens de maintien sont définis et agencés de telle manière que, lorsque la partie de connexion 6 de la diode OLED 1 est accueillie contre la paroi de fond 36 dans la cavité 40, les butées latérales 44 forment butées contre l'épaisseur du premier grand côté 8 de la plaque formant ladite partie de connexion 6, tandis que les parois latérales 46 forment une butée contre l'épaisseur des petits côtés de la plaque formant ladite partie de connexion 6.

L'ensemble des parois latérales définit ainsi une forme de cadre dans lequel la partie de connexion 6 de la diode OLED 1 est accueillie et maintenue.

Les butées latérales 44 sont agencées le long du grand côté de la base en étant espacées pour former un passage 48 pour la diode OLED 1. Ainsi, lorsque le capot de protection 34 est rabattu sur la base 32, la partie de connexion 6 peut loger dans la cavité 40 du support tandis que la partie émissive 4 peut s'étendre en dehors du support pour participer à la fonction d'éclairage et/ou de signalisation. Les deux butées latérales 44 de part et d'autre du passage 48 forment des butées coopérant avec les bords d'épaulement 10 de la partie de connexion 6 de la diode OLED 1.

Tel que cela sera décrit ci-après, le grand côté opposé à celui portant les butées latérales 44 est associé aux moyens d'articulation du capot de protection 34 sur la base 32.

Le capot de protection 34 est apte à venir fermer la cavité 40 décrite précédemment. Plus précisément, ce capot de protection 34 est apte à venir se placer dans une position fermée sur la face supérieure de la plaque formant la partie de connexion 6 de la diode OLED 1, une fois celle-ci accueillie dans la cavité 40 du support 2. Avantageusement, le capot de protection 34 présente donc une forme sensiblement parallélépipédique dont les dimensions sont complémentaires de celles de la base 32 du support 2.

Afin de passer de la position ouverte illustrée sur la figure 2 à une position fermée, non représentée par les figures, dans laquelle il vient refermer la cavité 40, le capot de protection 34 est articulé sur la base 32 au moyen d'une charnière 50. Plus précisément, selon ce mode de réalisation, la charnière 50 est constituée par deux pivots placés chacun à une extrémité du grand côté de la base 32 du support 2 opposé au premier grand côté 8 sur laquelle sont agencées les butées latérales 44. Le capot de protection 34 est ainsi mobile autour de l'axe de rotation défini par la charnière 50, entre la position ouverte dans laquelle il laisse accès au volume intérieur de la cavité 40 précédemment décrite, et une position fermée dans laquelle il ferme la cavité 40 précédemment décrite.

Le capot de protection prend la forme d'une plaque présentant une première face 52 et une deuxième face opposée, ces deux faces étant dites respectivement face intérieure et face extérieure du fait de leur agencement par rapport au module lorsque le capot est en position fermée.

Des deuxièmes plots de connexion sont prévus sur la première face 52 du capot de protection de sorte que les premiers plots conducteurs 14 portés par la diode OLED 1 et les deuxièmes plots puissent être reliés électriquement lorsque le capot de protection 34 est rabattu sur la base 32, dans la position fermée. La connexion électrique se fait par la présence d'un élément intermédiaire de connexion 56, réalisé en matière souple et présentant au moins une partie conductrice. Cet élément intermédiaire est agencé entre les premiers et deuxièmes plots conducteurs et permet leur liaison électrique en assurant un effet tampon qui évite d'endommager les plots conducteurs lorsque le capot vient en position contre la base. On pourra par exemple prévoir que l'élément intermédiaire est disposé par collage sur une série de plots conducteurs fixés sur le support, la partie conductrice de l'élément intermédiaire étant disposée au droit de ces deuxièmes plots conducteurs.

On va maintenant décrire un mode de réalisation de l'invention, illustrée sur la figure 2, selon lequel l'élément intermédiaire de connexion est formée par une barrette de connexion 56 rapportée sur la face intérieure 52 du capot de protection 34.

La barrette 56 est formée d'un matériau souple, de type silicone, dans l'épaisseur duquel est noyé de la matière conductrice, de manière à former un empilement de premières couches conductrices 58 et de deuxièmes couches d'amortissement, isolantes, 60. Le choix du silicone permet d'obtenir un matériau de base souple, présentant une forte résistivité électrique et apte à être imprégné de matière conductrice. On comprend que d'autre matériau pourrait être choisi dès lors qu'il présente les mêmes caractéristiques de souplesse et de résistivité électrique. Cette matière conductrice est noyée dans la masse de la barrette en formant des couches conductrices 58 s'étendant en série, à distance régulière les unes des autres, dans des proportions permettant d'une part la conductivité du courant et d'autre part la conservation de la souplesse de la barrette, susceptible d'être comprimée par la fermeture du capot de protection tel que cela sera décrit ci- après.

Les premières couches conductrices 58, ou couches de connexion, participent à former une portion de connexion 57, et les deuxièmes couches isolantes d'amortissement 60 participent à former une portion d'amortissement 59. Afin de conserver la souplesse de l'élément intermédiaire de connexion 56, l'épaisseur de la portion de connexion 57 est sensiblement inférieure, et notamment négligeable, par rapport à l'épaisseur de la portion d'amortissement.

Sur la figure 2, la barrette de connexion 56 se présente sous la forme d'une baguette sensiblement parallélépipédique dont la plus grande longueur est placée sensiblement parallèlement à un grand côté du capot de protection 34, c'est-à-dire dans la première direction d'allongement de la série des premiers plots conducteurs réalisés sur la diode OLED 1, lorsque celle-ci est en position dans la cavité 40. Plus précisément, selon le mode de réalisation illustré sur les figures, la barrette de connexion 56 est rapportée, sur la face intérieure 52 du capot de protection 34, le long du grand côté par lequel ce couvercle est relié à la base 32 du support 2 au moyen de la charnière 50. La direction de l'empilement des couches de connexion 58 de matériau conducteur et des couches d'amortissement 60 de matériau isolant forme la direction de la plus grande longueur de la baguette parallélépipédique dont la barrette de connexion 56 a la forme, et cet empilement est formé régulièrement de telle manière que chaque couche de connexion 58 est séparée de la couche de connexion 58 la plus proche par une couche d'amortissement 60 de matériau isolant. En d'autres termes, l'empilement est réalisé de telle manière que couches de connexion 58 et couches d'amortissement 60 de matériau isolant se succèdent le long de l'élément intermédiaire de connexion 56.

La barrette de connexion 56 est avantageusement collée sur la face intérieure 52 du capot de protection, et afin d'assurer la position de cette barrette par rapport au grand côté à proximité duquel elle s'étend, on pourra prévoir de réaliser une empreinte, non visible sur les figures, dans laquelle on vient disposer la colle servant à la fixation de la barrette de connexion.

Selon une caractéristique de l'invention, le nombre de couches de connexion 58 de la barrette de connexion 56 est au moins égal au nombre de premiers plots conducteurs 14 agencés sur la diode OLED 1. Avantageusement, le matériau choisi pour réaliser les couches de connexion 58 de la barrette de connexion 56 est le même que celui choisi pour réaliser les premiers plots conducteurs 14 de la diode OLED 1, et on saura choisir dans ce cas un matériau présentant une bonne conductivité électrique comme, à titre d'exemples non exhaustifs, le cuivre ou l'or.

Par ailleurs, la barrette de connexion 56 est agencée sur la face intérieure 52 du capot de protection 34 de sorte que chaque couche de connexion 58 de cette barrette 56 est disposée dans le prolongement d'une piste conductrice 62 collée ou gravée sur la face intérieure 52 du capot de protection 34. Ces pistes conductrices sont toutes reliées à un connecteur 64 complémentaire d'un connecteur d'un dispositif d'alimentation électrique et/ou de pilotage de l'ensemble d'éclairage et/ou de signalisation du véhicule, de sorte que l'alimentation électrique via le connecteur 64 permet le raccordement électrique des couches de connexion 58 de la barrette de connexion.

La barrette de connexion 56 est disposée sur la face intérieure du capot de protection 34 de telle manière que, lorsque la plaque formant la partie de connexion 6 de la diode OLED 1 est accueillie dans la cavité 40 du support 2 et lorsque le capot de protection 34 de ce même support 2 est rabattu pour fermer cette cavité, chaque premier plot conducteur 14 de la diode OLED 1 se trouve en contact avec une des couches de connexion 58 de la barrette de connexion 56. En d'autres termes, lorsque le capot de protection 34 est rabattu en position fermée pour recouvrir la cavité 40 du support 2, une fois la partie de connexion 6 de la diode OLED 1 accueillie dans cette cavité, la barrette de connexion se trouve enserrée, ou en d'autres termes plus imagés, "prise en sandwich", entre la partie de connexion 6 de la diode OLED 1 et le capot de protection 34.

On comprend que la charnière 50 est définie en fonction de l'épaisseur de la barrette de connexion 56, de telle manière qu'elle permette un plaquage optimal de cette dernière sur la plaque formant la partie de connexion 6 de la diode OLED 1 et, par là, un contact électrique optimal entre les premiers plots conducteurs 14 de la diode OLED 1 et les couches de connexion 58 de la barrette de connexion 56. Selon d'autres modes de réalisation alternatifs, le capot de protection 34 peut être réalisé sous forme d'une pièce indépendante venant se fixer sur la base 32 du support 2, par exemple par clipsage. Quel que soit le mode de réalisation choisi, l'invention prévoit que la base 32 du support 2 et le capot de protection 34 soient chacun muni de moyens complémentaires (non représentés sur les figures) permettant de les maintenir assemblés, de manière à maintenir un contact électrique de qualité entre les couches de connexion 58 de la barrette de connexion 56 et les premiers plots conducteurs de la partie de connexion 6 de la diode OLED 1. A titre d'exemples non limitatifs, il peut s'agir d'un crochet (non représenté sur les figures) solidaire du capot de protection 34 et apte à venir en prise sous la base 32 du support 2, ou dans une encoche agencée dans cette dernière.

Lorsque l'on rabat le capot de protection sur la partie de connexion 6 de l'OLED présente dans le support, on vient comprimer la barrette de connexion 56 en silicone contre cette partie de connexion 6 de l'OLED porteuse des premiers plots de connexion 14. La souplesse du silicone permet de ne pas générer un contact rigide générateur de contraintes éventuelles au moment de ce contact.

Selon un mode de réalisation alternatif de l'invention, non représenté par les figures, une ouverture, ou fenêtre, peut être ménagée dans le capot de protection 34, en présentant des dimensions équivalentes à celles de l'élément intermédiaire de connexion 56. Dans cette variante, l'élément intermédiaire de connexion est fixé sur la diode électroluminescente organique de sorte à venir à travers la fenêtre lorsque l'OLED est montée sur le support. La liaison de la barrette de connexion 56, portée par la diode OLED de manière à être en contact avec les premiers plots conducteurs 14, avec un dispositif d'alimentation électrique et/ou de pilotage de l'ensemble d'éclairage et/ou de signalisation du véhicule peut être directement réalisée à l'extérieur du support, lorsque le capot de protection 34 est en position fermée, puisque l'élément intermédiaire de connexion est amené à traverser cette ouverture. Le connecteur 64 du capot de protection 34 peut alors être supprimé.

L'invention atteint ainsi son but, en proposant un module lumineux qui met en oeuvre une diode OLED 1 dont le montage dans le support associé et la connexion électrique qui en résulte sont rendus fiables grâce à la souplesse du silicone faisant tampon entre la partie de connexion de la diode OLED et le capot de protection rabattu porteur du silicone partiellement conducteur, cette souplesse permettant d'appuyer fortement le capot de protection sur la partie de connexion 6 de l'OLED sans risque de casser cette diode.

Il est toutefois à noter que l'invention ne saurait se réduire aux moyens et configurations décrits et illustrés, mais qu'elle s'applique également à tous moyens ou configurations équivalents et à toute combinaison de tels moyens.

En particulier, si l'invention a été décrite dans ce qui précède dans un exemple de réalisation dans lequel une seule diode électroluminescente organique est associée à un seul support dans le module lumineux considéré, il va de soi que l'invention s'étend sans limitation aux cas où plusieurs diodes électroluminescentes organiques sont associées à un même support ou aux cas où le module lumineux considéré comporte plusieurs diodes électroluminescentes organiques et plusieurs supports. De même, les formes de la partie de connexion 6 de la diode OLED et du support 2 décrites ici sont indicatives, et l'invention s'étend également à tout autre forme de partie de connexion et de support, dès lors que le support permet une mise en position fiable de l'OLED pour que les premiers plots conducteurs de l'OLED soient en regard des premiers plots conducteurs du support et que l'on puisse ainsi réaliser une connexion par contact du silicone partiellement conducteur porté par le capot de protection sur des premiers plots conducteurs formés sur la partie de connexion de l'OLED, sans risque d'endommage cette dernière.

## Revendications

1. Module lumineux pour véhicule automobile comprenant au moins une diode électroluminescente organique (1), un support (2) et un élément intermédiaire de connexion (56), la diode électroluminescente organique (1) étant apte à être accueillie dans le support (2) équipé de moyens pour la connecter à un dispositif d'alimentation électrique et/ou de pilotage de l'alimentation électrique de ladite diode, ladite diode portant au moins un premier plot conducteur (14) destiné à être relié électriquement à au moins un deuxième plot conducteur, l'élément intermédiaire de connexion (56), dont au moins une partie est réalisée en matière souple et présentant au moins une partie conductrice, étant agencé entre lesdits premiers et deuxièmes plots conducteurs lorsqu'ils sont reliés électriquement
dans lequel ladite au moins une diode électroluminescente organique (1) comporte une partie émissive (4) et une partie de connexion (6) destinée à assurer la connexion électrique avec un dispositif d'alimentation et/ou de pilotage de l'ensemble d'éclairage ou de signalisation du véhicule, dans lequel ladite partie de connexion (6) comporte un ensemble de premiers plots conducteurs (14) dont chacun est relié à ladite partie émissive (4) par une piste conductrice (12)
dans lequel le support (2) comporte une base (32) qui forme une cavité (40) apte à accueillir la partie de connexion (6) de ladite au moins une diode électroluminescente organique (1), et en ce que cette base (32) comporte des moyens (44,46) de maintien de ladite partie de connexion (6) dans la cavité
**caractérisé en ce que** le support est agencé de sorte qu'un capot de protection soit monté pivotant sur la base, sur l'un des bords pour autoriser une position ouverte dans laquelle la base est dégagée et une position fermée dans laquelle le capot de protection vient en recouvrement de la base.

2. Module selon la revendication 1, **caractérisé en ce que** l'élément intermédiaire de connexion (56) comporte au moins une portion de connexion (58) réalisée en un matériau conducteur et une portion d'amortissement (60) formée d'un matériau souple.

3. Module selon la revendication précédente, **caractérisé en ce que** l'épaisseur de la portion de connexion (58) est sensiblement inférieure, notamment négligeable, à l'épaisseur de la portion d'amortissement (60).

4. Module selon l'une des revendications 2 ou 3, **caractérisé en ce que** le matériau souple formant la portion d'amortissement (60) présente une forte résistivité électrique.

5. Module selon l'une des revendications 2 à 4, **caractérisé en ce que** le matériau souple formant la portion d'amortissement (60) est un silicone.

6. Module selon l'une des revendications 2 à 5, **caractérisé en ce que** la portion de connexion comporte une couche de connexion (58), **en ce que** la portion d'amortissement comporte au moins deux couches d'amortissement (60) entre lesquelles est disposée la couche de connexion.

7. Module selon la revendication 6, **caractérisé en ce que** l'élément intermédiaire de connexion (56) comporte un empilement de couches de connexion (58) et de couches d'amortissement (60).

8. Module selon la revendication précédente, **caractérisé en ce que** l'empilement est réalisé de telle manière que chaque couche de connexion (58) est séparée de la couche de connexion la plus proche par une couche d'amortissement (60).

9. Module selon l'une des revendications précédentes, **caractérisé en ce que** l'élément intermédiaire de connexion (56) est rapporté sur une face intérieure (52) d'un capot de protection (34) du support (2).

10. Module selon la revendication précédente, **caractérisé en ce que** chaque couche de connexion (58) de l'élément intermédiaire de connexion (56) est reliée à une piste conductrice (62) agencée sur la face intérieure (52) du capot de protection (34), ces pistes conductrices (62) se rassemblant en un connecteur (64) apte à coopérer avec un connecteur complémentaire de l'ensemble d'éclairage ou de signalisation du véhicule.

11. Module selon l'une des revendications 9 ou 10, **caractérisé en ce que** les premiers plots conducteurs (14) de ladite au moins une diode électroluminescente organique (1) et l'élément intermédiaire de connexion (56) sont agencés de telle manière que, lorsque le capot de protection (34) est placé en recouvrement de la base (32), chaque plot conducteur (14) de cette dernière est en contact avec une couche de connexion (58) de l'élément intermédiaire de connexion (56).

12. Module selon l'une des revendications 9 à 11, lorsqu'elles dépendent d'au moins la revendication 10, **caractérisé en ce que** le capot de protection (34) et la base (32) du support (2) comportent chacun des moyens complémentaires aptes à coopérer pour permettre le maintien en position dudit capot de protection (34) sur ladite base (32).

13. Dispositif d'éclairage et/ou de signalisation d'un véhicule automobile, **caractérisé en ce qu'**il comporte au moins un module selon l'une quelconque des revendications.

## Patentansprüche

1. Leuchtmodul für ein Kraftfahrzeug, das mindestens eine organische Elektrolumineszenzdiode (1), einen Träger (2) und ein Verbindungszwischenelement (56) enthält, wobei die organische Elektrolumineszenzdiode (1) im Träger (2) aufgenommen werden kann, der mit Einrichtungen versehen ist, um sie mit einer Vorrichtung zur Stromversorgung und/oder Steuerung der Stromversorgung der Diode zu verbinden, wobei die Diode mindestens ein erstes leitendes Kontaktplättchen (14) trägt, das dazu bestimmt ist, mit mindestens einem zweiten leitenden Kontaktplättchen elektrisch verbunden zu werden, wobei das Verbindungszwischenelement (56), von dem mindestens ein Teil aus einem weichen Material hergestellt ist und das mindestens einen leitenden Teil aufweist, zwischen den ersten und zweiten Kontaktplättchen angeordnet ist, wenn sie elektrisch verbunden sind,
wobei die mindestens eine organische Elektrolumineszenzdiode (1) einen emittierenden Teil (4) und einen Verbindungsteil (6) aufweist, der dazu bestimmt ist, die elektrische Verbindung mit einer Vorrichtung zur Versorgung und/oder Steuerung der Beleuchtungs- oder Signaleinheit des Fahrzeugs zu gewährleisten, wobei der Verbindungsteil (6) eine Einheit von ersten leitenden Kontaktplättchen (14) aufweist, von denen jedes durch eine Leiterbahn (12) mit dem emittierenden Teil (4) verbunden ist,
wobei eine Träger (2) eine Basis (32) aufweist, die einen Hohlraum (40) bildet, der den Verbindungsteil (6) der mindestens einen organischen Elektrolumineszenzdiode (1) aufnehmen kann, und dass diese Basis (32) Einrichtungen (44, 46) zum Halt des Verbindungsteils (6) im Hohlraum aufweist,
**dadurch gekennzeichnet, dass** der Träger so eingerichtet ist, dass eine Schutzhaube schwenkbar auf die Basis auf einen der Ränder montiert ist, um eine offene Stellung, in der die Basis freigelegt ist, und eine geschlossene Stellung zu erlauben, in der die Schutzhaube die Basis bedeckt.

2. Modul nach Anspruch 1, **dadurch gekennzeichnet, dass** das Verbindungszwischenelement (56) mindestens einen Verbindungsabschnitt (58), der aus einem leitenden Material hergestellt ist, und einen Dämpfungsabschnitt (60) aufweist, der aus einem weichen Material hergestellt ist.

3. Modul nach dem vorhergehenden Anspruch, **dadurch gekennzeichnet, dass** die Dicke des Verbindungsabschnitts (58) deutlich geringer, insbesondere vernachlässigbar, ist als die Dicke des Dämpfungsabschnitts (60).

4. Modul nach einem der Ansprüche 2 oder 3, **dadurch gekennzeichnet, dass** das den Dämpfungsabschnitt (60) bildende weiche Material einen starken spezifischen elektrischen Widerstand aufweist.

5. Modul nach einem der Ansprüche 2 bis 4, **dadurch gekennzeichnet, dass** das den Dämpfungsabschnitt (60) bildende weiche Material ein Silikon ist.

6. Modul nach einem der Ansprüche 2 bis 5, **dadurch gekennzeichnet, dass** der Verbindungsabschnitt eine Verbindungsschicht (58) aufweist, dass der Dämpfungsabschnitt mindestens zwei Dämpfungsschichten (60) aufweist, zwischen denen die Verbindungsschicht angeordnet ist.

7. Modul nach Anspruch 6, **dadurch gekennzeichnet, dass** das Verbindungszwischenelement (56) einen Stapel von Verbindungsschichten (58) und von Dämpfungsschichten (60) aufweist.

8. Modul nach dem vorhergehenden Anspruch, **dadurch gekennzeichnet, dass** der Stapel so hergestellt wird, dass jede Verbindungsschicht (58) von der ihr am nächsten liegenden Verbindungsschicht durch eine Dämpfungsschicht (60) getrennt ist.

9. Modul nach einem der vorhergehenden Ansprüche, **dadurch gekennzeichnet, dass** das Verbindungszwischenelement (56) auf einer Innenseite (52) einer Schutzhaube (34) des Trägers (2) angefügt ist.

10. Modul nach dem vorhergehenden Anspruch, **dadurch gekennzeichnet, dass** jede Verbindungsschicht (58) des Verbindungszwischenelements (56) mit einer Leiterbahn (62) verbunden ist, die auf der Innenseite (52) der Schutzhaube (34) angeordnet ist, wobei diese Leiterbahnen (62) in einem Verbinder (64) zusammengefasst sind, der mit einem komplementären Verbinder der Beleuchtungs- oder Signaleinheit des Fahrzeugs zusammenwirken kann.

11. Modul nach einem der Ansprüche 9 oder 10, **dadurch gekennzeichnet, dass** die ersten leitenden Kontaktplättchen (14) der mindestens einen organischen Elektrolumineszenzdiode (1) und das Verbindungszwischenelement (56) so angeordnet sind, dass, wenn die Schutzhaube (34) in Überdeckung der Basis (32) platziert ist, jedes leitende Kontaktplättchen (14) dieser letzteren mit einer Verbindungsschicht (58) des Verbindungszwischenelements (56) in Kontakt ist.

12. Modul nach einem der Ansprüche 9 bis 11, wenn sie mindestens von Anspruch 10 abhängen, **dadurch gekennzeichnet, dass** die Schutzhaube (34) und die Basis (32) des Trägers (2) je komplementäre Einrichtungen aufweisen, die zusammenwirken können, um den Halt der Schutzhaube (34) in Stellung auf der Basis (32) zu erlauben.

13. Beleuchtungs- und/oder Signalvorrichtung eines Kraftfahrzeugs, **dadurch gekennzeichnet, dass** sie mindestens ein Modul nach einem der Ansprüche aufweist.

## Claims

1. Illumination module for a motor vehicle comprising at least one organic electroluminescent diode (1) a support (2) and an intermediate connection element (56), the organic electroluminescent diode (1) being capable of being received in the support (2) equipped with means for connecting same to a device for supplying electrical power and/or controlling the electrical power supply of said diode, said diode carrying at least one first conductor terminal (14) designed to be connected electrically to at least a second conductor terminal, the intermediate connection element (56), at least a portion of which is produced from flexible material and having at least one conducting part, being arranged between said first and second conductor terminals when they are electrically connected,
wherein said at least one organic electroluminescent diode (1) comprises an emissive part (4) and a connection part (6) designed to make the electrical connection with a device for supplying power to and/or controlling the lighting or signaling assembly of the vehicle, wherein said connection part (6) comprises a set of first conductor terminals (14), each of which is connected to said emissive part (4) by a conducting track (12), wherein the support (2) comprises a base (32) forming a cavity (40) capable of receiving the connection part (6) of said at least one organic electroluminescent diode (1), and in that this base (32) comprises means (44, 46) for holding said connection part (6) in the cavity, **characterized in that** the support is arranged such that a protection cap is mounted pivotably on the base, on one of the edges to allow an open position in which the base is perceivable and a closed position in which the protection cap covers over the base.

2. Module according to Claim 1, **characterized in that** the intermediate connection element (56) comprises at least one connection portion (58) produced from a conducting material and one damping portion (60) produced from a flexible material.

3. Module according to the preceding claim, **characterized in that** the thickness of the connection portion (58) is substantially less than the thickness of the damping portion (60), in particular of negligible thickness.

4. Module according to one of Claims 2 and 3, **characterized in that** the flexible material forming the damping portion (60) has a high electrical resistivity.

5. Module according to one of Claims 2 to 4, **characterized in that** the flexible material forming the damping portion (60) is a silicone.

6. Module according to one of Claims 2 to 5, **characterized in that** the connection portion comprises a connection layer (58), **in that** the damping portion comprises at least two damping layers (60) between which the connection layer is arranged.

7. Module according to Claim 6, **characterized in that** the intermediate connection element (56) comprises a stack of connection layers (58) and damping layers (60) .

8. Module according to the preceding claim, **characterized in that** the stack is produced in such a manner that each connection layer (58) is separated from the closest connection layer by a damping layer (60) .

9. Module according to one of the preceding claims, **characterized in that** the intermediate connection element (56) is attached to an interior face (52) of a protection cap (34) of the support (2).

10. Module according to the preceding claim, **characterized in that** each connection layer (58) of the intermediate connection element (56) is connected to a conducting track (62) arranged on the interior face (52) of the protection cap (34), these conducting tracks (62) coming together in a connector (64) capable of interacting with a complementary connector of the lighting or signaling assembly of the vehicle.

11. Module according to one of Claims 9 and 10, **characterized in that** the first conductor terminals (14) of said at least one organic electroluminescent diode (1) and the intermediate connection element (56) are arranged in such a manner that, when the protection cap (34) is placed so as to cover over the base (32), each conductor terminal (14) of the latter is in contact with a connection layer (58) of the intermediate connection element (56).

12. Module according to one of Claims 9 to 11, when dependent on at least Claim 10, **characterized in that** the protection cap (34) and the base (32) of the support (2) each comprise complementary means capable of interacting to allow said protection cap (34) to be held in position on said base (32).

13. Lighting and/or signaling device of a motor vehicle, **characterized in that** it comprises at least one module according to any one of the claims.
